# EUROPÄISCHE PATENTSCHRIFT

(11) **EP 2 883 476 B1**
(45) Veröffentlichungstag und Bekanntmachung des Hinweises auf die Patenterteilung: **27.12.2017**
(21) Anmeldenummer: 13405139.0
(22) Anmeldetag: 13.12.2013
(51) Int. Cl.: A47B 47/00

(54) **Knotenelement für ein Möbelsystem mit einer dreidimensionalen tragenden Rohrstruktur**
Node element for a furniture system with a three-dimensional supporting tubular structure
Élément de noeud pour un système de meuble doté d'une structure tubulaire porteuse tridimensionnelle

(43) Veröffentlichungstag der Anmeldung: 17.06.2015
(73) Patentinhaber: USM Holding AG, 3074 Muri bei Bern (CH)
(72) Erfinder: Schärer, Alexander, CH-3074 Muri bei Bern (CH); Dienes, Thomas, CH-3006 Bern (CH); Krenger, Stefan, CH-3604 Thun (CH)
(74) Vertreter: Rüfenacht, Philipp Michael

(56) Entgegenhaltungen:
- EP-A2- 0 980 120
- CH-A- 429 317
- DE-A1- 3 931 225
- US-A- 3 921 360

## Beschreibung

### Technisches Gebiet

Die Erfindung betrifft ein Knotenelement für ein Möbelsystem mit einer dreidimensionalen tragenden Rohrstruktur, wobei das Knotenelement mehrere Anschlussstellen zur mechanischen Befestigung von zwei oder mehreren Rohren umfasst und wobei das Knotenelement zwei voneinander elektrisch isolierte Bereiche aufweist. Die Erfindung betrifft weiter ein Möbelsystem mit derartigen Knotenelementen und ein Verfahren zur Herstellung eines solchen Knotenelements.

### Stand der Technik

Möbelsysteme mit einer dreidimensionalen tragenden Rohrstruktur, umfassend eine Mehrzahl von Rohren und eine Mehrzahl von dreidimensionalen Knotenelementen, wobei zwei oder mehrere Rohre an Anschlussstellen eines der dreidimensionalen Knotenelemente befestigbar sind, sind bekannt.

So offenbart beispielsweise die CH 429 317 (U. Schärer's Söhne) eine Rohrverbindung für den Gestellbau, bei welcher zur lösbaren Verbindung der Rohrenden miteinander ein Verbindungskopf mit je einer Gewindebohrung zu jedem Rohrende vorgesehen ist. Die Gewindebohrungen verlaufen in der jeweiligen Achsrichtung. In sie lassen sich in das Rohrende hineinragende Kopfschrauben einschrauben, auf deren Schaft sich zwei Keilhülsen befinden, die mit der Keilfläche aneinander und mit der davon abgewandten Stirnseite am Verbindungskopf bzw. am Schraubenkopf anstehen und bei angezogener Schraube das Rohrende innenseitig festhalten.

Es ist ein Bedürfnis, in oder an Möbeln und Möbelsystemen angeordnete Verbraucher, wie z. B. Leuchten, mit elektrischer Energie zu versorgen. Dazu können die Möbel z. B. Öffnungen aufweisen, durch welche Versorgungskabel von der Rückseite her durchgeführt werden können. Ebenfalls üblich sind Kanäle, in welchen solche Versorgungskabel unauffällig bzw. unsichtbar geführt werden können.

Auch im Rahmen von modularen Möbelsystemen mit dreidimensionalen tragenden Rohrstrukturen sind Einrichtungen zur Stromführung bekannt. Die EP 0 980 120 A2 (H. Breuer) betrifft zum Beispiel einen Universalträger zur Erstellung von Regalen, Schränken, Tragwerken usw. Im Innern des Universalträgers ist eine elektrische Leitungseinrichtung angeordnet, an die mittels Stromabnehmer Verbraucher, z. B. Lichtquellen, angeschlossen werden können. Der Universalträger umfasst bevorzugt ein Leiterprofil aus einem isolierenden Werkstoff, das in seinem Querschnitt eine Ausnehmung aufweist, in welcher die elektrische Leitungseinrichtung aufgenommen ist; das Leiterprofil kann einen Nullleiter, eine Phase sowie ggf. einen Erdleiter tragen. Der Abgriff erfolgt mittels Stromabnehmern, die ebenfalls aus einem isolierenden Werkstoff bestehen und im angeschlossenen Stromleiter zu den zentral im Profil angeordneten Leitern führen, der Strom des zentral angeordneten Nullleiters wird durch eine Spitze, der der Phasen durch einen ringförmigen Kontakt abgegriffen. Das Leiterprofil kann selbsttragend ausgebildet sein, so dass sich ein zusätzliches Tragprofil erübrigt. Der Universalträger kann mit Fachwerkknoten zusammenwirken, wobei sich an einem Knoten drei stromführende Achsen kreuzen können.

Die DE 39 31 225 A1 (E. Burgstaller) betrifft eine Vorrichtung zur Herstellung von Präsentationsaufbauten, die eine einfache Montage ermöglicht und ebenfalls eine elektrische Energieversorgung einschliesst. Sie umfasst Verbindungsknoten mit einem würfelförmigen Gehäuse zum Verbinden von Aufbauelementen. Das Gehäuse umfasst Zapfeneinsetzöffnungen, in welchen Zapfen der Aufbauelemente aufgenommen werden. Der Verbindungsknoten enthält ferner ein zentrales elektrisches Leitersystem, das für jede Zapfeneinsetzöffnung einen Teil einer elektrischen Anschlusseinrichtung aufweist, das mit einem komplementären Teil im Zapfenbereich des Aufbauelements leitend verbindbar ist. Namentlich umfassen die Zapfen vorstehende Steckeranordnungen, die mit Verbindungsleitungen im Innern der Aufbauelemente verbunden sind. Der Verbindungsknoten umfasst ein würfelförmiges zentrales elektrisches Leitersystem, welches mittig in den jeweiligen Aussenflächen Steckdosenausnehmungen aufweist, die untereinander verdrahtet sind.

Die bekannten Systeme sind relativ kompliziert, und die verwendeten Kontakteinrichtungen, z. B. Buchsen und Stecker, sind empfindlich auf mechanische Einflüsse, besonders im Bereich der Knotenelemente.

### Darstellung der Erfindung

Aufgabe der Erfindung ist es, ein dem eingangs genannten technischen Gebiet zugehörendes Knotenelement für ein Möbelsystem mit einer dreidimensionalen tragenden Rohrstruktur zu schaffen, welches einen einfachen Aufbau und mechanisch unempfindliche Einrichtungen zur Stromversorgung aufweist.

Die Lösung der Aufgabe ist durch die Merkmale des Anspruchs 1 definiert. Gemäss der Erfindung sind die zwei voneinander elektrisch isolierten Bereiche derart angeordnet, dass zwei elektrische Polaritäten an den Anschlussstellen für die Rohre koaxial abgegriffen werden, derart, dass der innere (102) isolierte Bereich vom äusseren (101) isolierten Bereich ganz umschlossen ist.

Die elektrische Verbindung lässt sich somit auf einfache Weise schaffen und für die eigentlichen Kontakte steht verhältnismässig viel Raum zur Verfügung. Die relative Drehstellung der Rohre und der Knotenelemente ist nicht kritisch für die elektrische Kontaktierung.

Ein dreidimensionales Knotenelement im Sinn der Erfindung ermöglicht den Anschluss mehrerer Rohre, welche im befestigten Zustand nicht zwingend alle auf derselben Linie oder in derselben Ebene liegen müssen. Besonders bevorzugt sind Knotenelemente, welche sechs Anschlussstellen aufweisen, die auf der Aussenseite eines gedachten Würfels angeordnet sind. Entsprechend lassen sich mit Rohren und derartigen Knotenelementen Möbel aufbauen, deren Strukturelemente (Rohre) entlang eines dreidimensionalen rechteckigen Gitters verlaufen. Die Knotenelemente selbst können entsprechend würfelförmig sein oder eine andere geeignete Form aufweisen, z. B. diejenige einer Kugel.

Koaxial bedeutet jeweils, dass der innere isolierte Bereich vom äusseren isolierten Bereich ganz umschlossen ist.

Ein erfindungsgemässes Möbelsystem umfasst also eine Mehrzahl von Rohren und eine Mehrzahl solcher dreidimensionaler Knotenelemente. Dabei weist zumindest eines der Rohre zwei voneinander isolierte Stromleiter zur Stromführung einer ersten Polarität und einer zweiten Polarität entlang des Rohrs auf, derart dass nach der mechanischen Befestigung des Rohrs am Knotenelement die zwei Stromleiter elektrisch mit den zwei voneinander elektrisch isolierten Bereichen des Knotenelements verbunden sind. Strom kann also zweipolig von Rohr zu Rohr geführt werden. Möglich sind im Rahmen des erfindungsgemässen Prinzips auch Erweiterungen mit drei oder gar mehr Polen (z. B. auch wenn mehrere unabhängige Stromkreise benötigt werden).

Beim Möbelsystem kann es sich beispielsweise um ein Regalsystem, ein Schranksystem, ein Schubladensystem oder ein System mit unterschiedlichen der genannten Komponenten handeln. Das Möbelsystem ist insbesondere modular aufgebaut, d. h. mit einer beschränkten Zahl von Grundelementen (Rohre, Knotenelemente und Ein- sowie Anbauten) lassen sich praktisch unbeschränkt viele verschiedene Konfigurationen aufbauen.

Der Querschnitt der Rohre kann unterschiedliche Formen annehmen. So kann er beispielsweise die Aussenform eines Kreises haben oder eines regelmässigen Polygons, es sind aber auch unregelmässige geschlossene oder gar offene Formen möglich.

Es ist nicht zwingend, dass alle Rohre und alle Knotenelemente die erwähnten Leitereigenschaften aufweisen. Im Rahmen eines erfindungsgemässen Möbelsystems lassen sich Rohre und Knotenelemente ohne leitende Funktion mit den leitenden Elementen kombinieren.

Bevorzugt umfasst das mindestens eine Knotenelement mehrere voneinander elektrisch isolierte, koaxial angeordnete Bereiche, so dass elektrischer Strom zweipolig von jedem am Knotenelement befestigbaren Rohr in jedes andere am Knotenelement befestigte Rohr führbar ist. Das Knotenelement lässt sich auf diese Weise einfach ausbilden, Kreuzungen oder separate Leiter wie Kabel o. ä. erübrigen sich.

Bevorzugt umfasst das mindestens eine Knotenelement einen Aussenteil aus einem leitenden Material, einen darin aufgenommenen Innenteil aus einem leitenden Material und eine dazwischen angeordnete Trennschicht aus elektrisch isolierendem Material. Mit nur drei Teilen lässt sich so ein Knotenelement mit den erforderlichen mechanischen und elektrischen Funktionen ausbilden.

Ein derartiges Knotenelement kann insbesondere durch folgende Schritte hergestellt werden:
a) Ein Werkstück aus einem leitenden Material wird, insbesondere durch einen Fräs- und/oder Drehvorgang, so bearbeitet, dass zwei koaxial vorliegende, vollständig voneinander getrennte Teile vorliegen.
b) Dann wird eine Trennschicht aus elektrisch isolierendem Material zwischen die beiden Teile eingebracht.

Vollständig voneinander getrennt bedeutet hier, dass die beiden Teile nirgends mehr durch das ursprüngliche Material verbunden sind. Bei dreidimensionalen Knotenelementen werden die beiden Teile jedoch in der Regel so vorliegen, dass sie nicht entformbar sind, d. h. dass sie sich nicht zerstörungsfrei voneinander trennen lassen.

Auf diese Weise lassen sich auch dreidimensional leitende Knotenelemente mit einer verhältnismässig komplexen Geometrie mit einer geringstmöglichen Zahl an Teilen fertigen. Entsprechend wird eine bestmögliche mechanische Stabilität mit hervorragenden elektrischen Leitereigenschaften erhalten.

Alternativ werden der Innenteil und der Aussenteil gesondert gefertigt und anschliessend aneinander befestigt. Je nach Geometrie des Knotenelements ist es in diesem Fall erforderlich, das Aussenteil aus mehreren Teilen aufzubauen, die nach dem Einsetzen des Innenteils miteinander verbindbar sind.

Mit Vorteil ist eine erste der zwei elektrischen Polaritäten am Aussenteil abgreifbar. Dies ermöglicht eine besonders einfache Kontaktierung.

Bei einer bevorzugten Ausführungsform weist der Innenteil des mindestens einen Knotenelements Gewinde zur Befestigung der zwei oder mehreren Rohre auf. Diese ermöglichen eine einfache und stabile mechanische Verbindung der Rohre mit den Knotenelementen. Die Rohre lassen sich zudem gegenüber den Knotenelementen verspannen, so dass ein axiales Spiel ausgeschlossen wird.

Bevorzugt bildet eine Aussenfläche des mindestens einen Knotenelements einen ersten der beiden elektrisch isolierten Bereiche, und die Gewinde bilden einen zweiten der beiden elektrisch isolierten Bereiche. Die Kontaktierung zwischen den Rohren und den Knotenelementen kann so besonders einfach erfolgen. Elemente, die für die mechanische Befestigung ohnehin benötigt werden und somit vorhanden sind, nämlich die Gewinde für die axiale Fixierung und die Aussenfläche für die Abstützung der Rohre, werden gleichzeitig auch für die Kontaktierung eingesetzt.

Neben Schraubverbindungen sind auch andere Befestigungsmechanismen für die Verbindung zwischen Rohr und Knotenelement möglich, z. B. Klemmverbindungen, Einschubnuten, formschlüssige Verbindungen mit Sicherungsteilen (z. B. Sicherungsbolzen) o. ä.

Vorzugsweise sind der Aussenteil und der Innenteil aus einem metallischen Material, namentlich einem leitenden metallischen Material, gefertigt. Ein geeignetes Material ist beispielsweise Messing (gegebenenfalls verchromt).

Andere Materialien können ebenfalls verwendet werden, die Teile können massiv oder mehrteilig bzw. mehrschichtig aufgebaut sein.

Bevorzugt sind die zwei voneinander isolierten Stromleiter zur Stromführung in zumindest einem der Rohre koaxial zueinander angeordnet. Die koaxiale Anordnung der Leiter in den Knotenelementen wird somit in den Rohren fortgeführt. Es ergibt sich so eine besonders einfache Leiteranordnung in sämtlichen beteiligten Strukturelementen des Möbelsystems.

Bevorzugt umfasst das zumindest eine Rohr ein strukturelles Rohrelement aus einem leitenden Material, welches zur Führung der ersten Polarität dient, und einen isoliert im strukturellen Rohrelement aufgenommenen Innenleiter zur Führung der zweiten Polarität. Bei der ersten Polarität handelt es sich insbesondere um den Nullleiter (Erde). Der Aufbau des Rohrs ist somit besonders einfach.

Mit Vorteil umfasst das Möbelsystem Konnektoren, welche einerseits an den Knotenelementen und andererseits an den Rohren anbringbar sind und gleichzeitig eine mechanisch belastbare Befestigung und eine elektrische Kontaktierung zwischen Knotenelement und daran angebrachtem Rohr schaffen. Die Konnektoren können spezifische Elemente umfassen, welche die Stabilität der mechanischen Verbindung und die Zuverlässigkeit der elektrischen Verbindung sicherstellen. Die Konnektoren können beispielsweise Schraubmittel umfassen, welche mit den erwähnten Gewinden in den Knotenelementen zusammenwirken können und somit u. a. den elektrischen Kontakt für die zweite Polarität schaffen. Ferner können Kontaktelemente vorhanden sein, welche durch einen geeigneten Mechanismus an eine leitende Oberfläche der Knotenelemente gedrückt werden und somit den elektrischen Kontakt für die erste Polarität schaffen.

Bei einer bevorzugten Ausführungsform umfassen die Konnektoren folgendes:
a) ein mechanisches Befestigungselement, welches zum Festhalten eines am Konnektor zu befestigenden Rohrs mittels einer Schraube spannbar ist, wobei die Schraube derart am mechanischen Befestigungselement angeordnet ist, dass sie mit einem Gewinde eines der Knotenelemente zusammenwirken kann, und
b) ein elektrisches Kontaktelement zur Kontaktierung der Schraube und des Innenleiters des durch das mechanische Befestigungselement gehaltenen Rohrs.

Derartige Konnektoren schaffen eine sichere Verbindung, wobei die Schraube sowohl zum Spannen des mechanischen Befestigungselements als auch zur elektrischen Verbindung einer der Polaritäten genutzt wird, was den Bauteilaufwand verringert.

Die beschriebenen Konnektoren sind auch unabhängig von den erfindungsgemässen Knotenelementen und Rohren für die elektrische Verbindung struktureller Elemente modularer Möbelsysteme von Vorteil.

In einer Alternative zu separaten Konnektoren können die Rohre direkt mit Befestigungselementen versehen sein, mit welchen sie sich an den Knotenelementen befestigen lassen, wobei die Befestigungselemente derart ausgebildet sind, dass eine elektrische Kontaktierung erfolgt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Schrägbild eines Knotenelements für das erfindungsgemässe Möbelsystem;
- Fig. 2: einen Querschnitt durch das Knotenelement;
- Fig. 3: einen Querschnitt durch die Verbindung eines Knotenelements mit einem Rohr des erfindungsgemässen Möbelsystems; und
- Fig. 4: einen Querschnitt durch ein Knotenelement mit angebrachtem Kontaktierungselement.

Grundsätzlich sind in den Figuren gleiche Teile mit gleichen Bezugszeichen versehen.

### Wege zur Ausführung der Erfindung

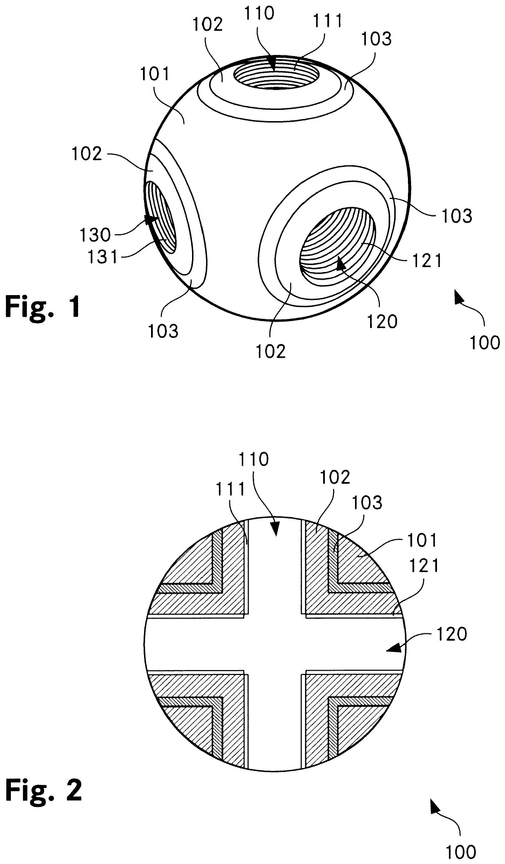

Die Figur 1 zeigt ein Schrägbild eines Knotenelements für das erfindungsgemässe Möbelsystem, die Figur 2 einen Querschnitt durch das Knotenelement in einer Ebene, welche zwei zueinander senkrechte Achsen zweier Gewindebohrungen umfasst.

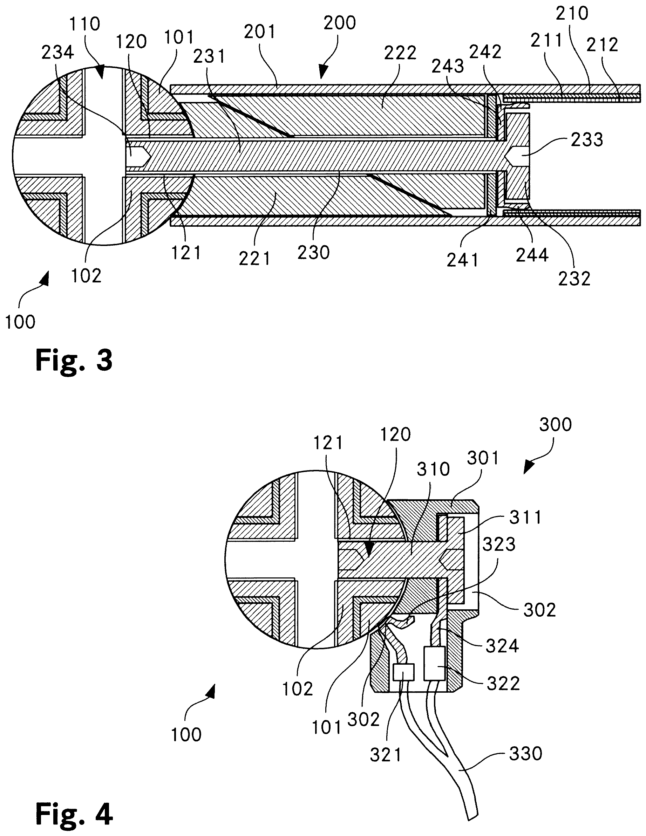

Das Knotenelement 100 ist als kugelförmiger Verbindungskopf ausgebildet. Dieser wird, wie unten im Zusammenhang mit der Figur 3 beschrieben, zwischen den zu verbindenden Enden von Rohren des Möbelsystems angeordnet. Das Knotenelement umfasst drei Gewindebohrungen 110, 120, 130, deren Achsen jeweils senkrecht zueinander und diametral durch den Mittelpunkt der Kugel verlaufen. Entsprechend weist die Aussenfläche des Knotenelements 100 sechs Öffnungen auf, durch welche mit den Gewinden 111, 121, 131 zusammenwirkende Schrauben einführbar sind. Somit können nach Bedarf mit Hilfe des Knotenelements 100 zwei bis sechs Rohre miteinander verbunden werden.

Das Knotenelement 100 besteht aus einem einstückigen Aussenteil 101, einem einstückigen Innenteil 102 und einer dazwischen angeordneten elektrischen Isolationsschicht 103. Die Gewindebohrungen 110, 120, 130 verlaufen ausschliesslich durch den Innenteil 102. Der Aussenteil 101 und der Innenteil 102 sind aus verchromtem Messing gefertigt, die Isolationsschicht 103 besteht aus einem geeigneten Kunststoff.

Das Knotenelement wird wie folgt hergestellt: Aus einem massiven Block aus Messing wird durch übliche Fräs- und oder Drehbearbeitungsvorgänge eine Kugel gefertigt, anschliessend werden die durchgehenden Bohrungen hergestellt und die Gewinde eingefräst.

In einem folgenden Schritt werden in einem vorgegebenen Abstand um die Gewindebohrungen Ringe eingefräst. Ringe benachbarter Gewindebohrungen treffen sich in einem vorgegebenen Abstand zur jeweils senkrecht zur Ringachse verlaufenden Gewindebohrung. Dadurch werden zwei koaxial angeordnete, nicht entformbare aber vollständig voneinander getrennte Teile hergestellt, der Aussenteil 101 und der darin aufgenommene Innenteil 102. Diese beiden Teile werden nun gemeinsam in an sich bekannter Weise verchromt.

Anschliessend werden der Aussenteil 101 und der Innenteil 102 mittels geeigneter Halteeinrichtungen in einer relativen Position gehalten, in welcher die Achsen der jeweiligen Öffnungen präzise zusammenfallen. In dieser Position wird der Kunststoff für die Isolationsschicht 103 zwischen den Aussenteil 101 und den Innenteil 102 eingespritzt. Nach erfolgter Härtung des Kunststoffs erhält man das fertige Knotenelement 100.

Die Figur 3 zeigt einen Querschnitt durch die Verbindung eines Knotenelements mit einem Rohr des erfindungsgemässen Möbelsystems.

Das Rohr 200 umfasst einen Aussenmantel 201 aus verchromtem Stahl. Im Aussenmantel aufgenommen ist ein Innenrohr 210 mit einer äusseren Schicht 211 aus einem isolierenden Material, z. B. einem Kunststoff, und einer inneren Schicht 212 aus einem leitenden Material, z. B. Kupfer. Das Innenrohr 210 erstreckt sich nicht bis zu den Enden des Rohrs 200, sondern endet in einem vorgegebenen Abstand von beispielsweise ca. 10 cm. Im befestigten Zustand kontaktiert der Aussenmantel 201 mit seinem freien Ende das Knotenelement 100 im Bereich von dessen Aussenteil 101. Zur Vergrösserung der Kontaktfläche kann der Aussenmantel 201 in Abweichung des dargestellten Ausführungsbeispiels stirnseitig eine der Kugeloberfläche angepasste Geometrie aufweisen.

Zur Befestigung des Rohrs 200 am Knotenelement 100 sind im Rohr 200 zwei im Wesentlichen gleich aufgebaute Keilhülsen 221, 222 und eine Kopfschraube 230 aus elektrisch leitendem Material aufgenommen, wobei die Kopfschraube 230 durch die beiden Keilhülsen 221, 222 hindurchgesteckt und mit dem Ende ihres Gewindeschafts 231 in die zugeordnete Gewindebohrung 120 des Knotenelements 100 eingeschraubt ist. Die vordere Keilhülse 221, welche dem Knotenelement 100 zugewandt ist, ist aus einem elektrisch nicht leitenden Material hergestellt oder weist im Bereich der Kontaktfläche mit dem Rohr 200, der Kopfschraube 230 und/oder dem Knotenelement 100 eine elektrische Isolation auf. Zwischen dem Kopf 232 der Schraube 230 und der vom Knotenelement 100 abgekehrten Stirnseite der Keilhülse 222 sind ein Isolatorring 241 aus einem elektrisch isolierenden Material, z. B. einem Kunststoff, und ein Kontaktring 242 aus einem elektrisch leitenden Material, z. B. Kupferblech, angeordnet. Der Kontaktring 242 umfasst einen ringförmigen Hauptteil 243 und einen umlaufend aussen angeordneten federnden Kontaktteil 244. Letzterer kontaktiert im montierten Zustand die innere Schicht 212 des Innenrohrs 210.

Die Keilhülsen 221, 222 sind mit ihren zur Hülsenachse schrägen Keilflächen aneinander abgestützt und stehen mit ihrer vom Knotenelement 100 abgekehrten Stirnseite am Kopf 232 der Schraube 230 an. Der Aussendurchmesser der Keilhülsen 221, 222 ist nur um das leichte Aufschieben des Rohrendes auf dieselben ermöglichendes Spiel kleiner als der Innendurchmesser des Rohrendes. Wird nach dem Aufschieben des Rohres 200 auf die Keilhülsen 221, 222 die Kopfschraube 230 angezogen, werden die Keilhülsen 221, 222 gegen die Innenseite des Rohrendes verdrängt und halten es fest. Die Verschiebung der am Schraubenkopf anstehenden Keilhülse weist ferner eine gegen das Knotenelement 100 gerichtete Verschiebungskomponente auf, die das Rohr 200 gegen das Knotenelement 100 hin mitzunehmen sucht und dadurch die sichere Kontaktierung zwischen dem Aussenmantel 201 des Rohrs 200 und dem Aussenteil 101 des Knotenelements 100 gewährleistet.

Zum Anziehen und Lösen der Kopfschraube 230 ist deren Kopf 232 mit einem Mehrkant-Steckloch 233 (oder alternativ mit einem Schlitz für den Eingriff eines Schraubenziehers) versehen. Auch das dem Kopf 232 entgegengesetzte Ende des Gewindeschafts 231 der Schraube 230 weist ein Mehrkant-Steckloch 234 zum Einstecken eines Schlüssels auf.

Bei verhältnismässig kurzen Rohren ist der Kopf 232 der Schraube 230 mittels eines Schraubenziehers oder -schlüssels erreichbar. In vielen Fällen, wie z.B. beim Schaffen einer Eckverbindung, ist das Mehrkant-Steckloch 234 des Gewindeschaftes 231 der Schraube 230 durch die im Knotenelement 100 diametral gegenüber ausmündende, unbenützte Öffnung der Gewindebohrung 120 mittels eines entsprechenden Mehrkant-Steckschlüssels zugänglich. Übrigens hat sich gezeigt, dass bei vorerst nur schwach an der Rohrinnenseite anliegenden Keilhülsen ein sattes Anziehen oder ein Lösen der Schraube 230 auch durch entsprechendes Drehen des Rohres 200 um seine Achse möglich ist.

Die bei einer Rohrverbindung unbenützten Öffnungen der Gewindebohrungen 110, 120 werden nach dem Festziehen der Schrauben 230 mit Vorteil durch je eine Madenschraube verschlossen.

Im verbundenen Zustand lässt sich zwischen den Rohren 200 und dem Knotenelement 100 Strom zweipolig übertragen. Zur Kontaktierung der ersten Polarität (Nullleiter) kontaktiert der Aussenmantel 201 des Rohrs 200 direkt den Aussenteil 101 des Knotenelements 100. Die zweite Polarität (Phase) wird im Bereich des Rohrs 200 in der inneren Schicht 212 des Innenrohrs 210 geführt. Dort wird der Strom durch den federnden Kontaktteil 244 des Kontaktrings 242 abgegriffen und über den Hauptteil 243 auf den Kopf 232 der Schraube 230 übertragen. Über den Gewindeteil 231 der Schraube 230 und das Gewinde 121 der Gewindebohrung 120 des Knotenelements 100 erfolgt dann die Kontaktierung des Innenteils 102 des Knotenelements 100. Weitere mit dem Knotenelement 100 auf dieselbe Weise verbundene Rohre sind somit über den Aussenteil 101 und den Innenteil 102 zweipolig mit den entsprechenden Leitern des Rohrs 200 elektrisch verbunden.

Die Figur 4 zeigt einen Querschnitt durch ein Knotenelement 100 mit angebrachtem Kontaktierungselement 300. Das Kontaktierungselement 300 umfasst ein Gehäuse 301 mit einer Aufnahmebohrung 302 für eine Halteschraube 310. Im Gehäuse aufgenommen sind weiter zwei Anschlussstellen 321, 322 für ein zweipoliges Anschlusskabel 330. Mit den Anschlussstellen 321, 322 ist je ein Kontaktelement 323, 324 leitend verbunden. Eines der Kontaktelemente 323 ist federnd ausgebildet und tritt durch eine im befestigten Zustand dem Knotenelement 100 zugewandte Öffnung 302 im Gehäuse 301 aus dem Gehäuse 301 hinaus. Das andere Kontaktelement 324 umfasst einen ringförmigen Abschnitt, welcher die Aufnahmebohrung 302 an ihrem hinteren, dem Knotenelement 100 abgewandten Ende umgibt.

Das Kontaktierungselement 300 kann durch einfaches Einschrauben der Halteschraube 310 in einer beliebigen Öffnung einer Gewindebohrung 120 des Knotenelements 100 befestigt werden. Der Kopf 311 der Halteschraube 310 kontaktiert den die Aufnahmebohrung 302 umgebenden Abschnitt des Kontaktelements 324. Über die Halteschraube 310 und das Gewinde 131 wird ein Kontakt zum Innenteil 102 des Knotenelements 100 geschaffen. Die zweite Polarität wird über das andere Kontaktelement 323, welches direkt federnd am Aussenteil 101 des Knotenelements 100 anliegt, übertragen.

Mit Hilfe des Kontaktierungselements 300 lässt sich grundsätzlich sowohl im Möbelsystem geführter Strom abgreifen als auch ein Möbelsystem mit Strom versorgen. Die im Möbelsystem geführte Spannung sollte aus Sicherheitsgründen 48 V nicht übersteigen, ein gut geeigneter Spannungswert ist 24 V.

Die Stromführung in den Rohren kann auf unterschiedliche Weise erfolgen, so können anstelle des Innenrohrs auf die Innenseite des Aussenmantels aufgebrachte Beschichtungen eingesetzt werden. Auch die Leitung mittels Kabeln ist denkbar.

Zusammenfassend ist festzustellen, dass die Erfindung ein Möbelsystem schafft, welches einen einfachen Aufbau und mechanisch unempfindliche Einrichtungen zur Stromversorgung aufweist.

## Patentansprüche

1. Knotenelement (100) für ein Möbelsystem mit einer dreidimensionalen tragenden Rohrstruktur, wobei das Knotenelement (100) mehrere Anschlussstellen (110, 120, 130) zur mechanischen Befestigung von zwei oder mehreren Rohren (200) umfasst, wobei das Knotenelement (100) zwei voneinander elektrisch isolierte Bereiche (101, 102) aufweist, **dadurch gekennzeichnet, dass** die zwei voneinander elektrisch isolierten Bereiche (101, 102) derart angeordnet sind, dass zwei elektrische Polaritäten an den Anschlussstellen (110, 120, 130) für die Rohre (200) koaxial abgegriffen werden, derart, dass der innere (102) isolierte Bereich vom äusseren (101) isolierten Bereich ganz umschlossen ist.

2. Knotenelement nach Anspruch 1, **gekennzeichnet durch** mehrere voneinander elektrisch isolierte, koaxial angeordnete Bereiche (101, 102), welche derart angeordnet sind, dass elektrischer Strom zweipolig von jedem am Knotenelement (100) befestigbaren Rohr (200) in jedes andere am Knotenelement (100) befestigbare Rohr (200) führbar ist.

3. Knotenelement nach Anspruch 2, **dadurch gekennzeichnet, dass** es einen Aussenteil (101) aus einem leitenden Material, einen darin aufgenommenen Innenteil (102) aus einem leitenden Material und eine dazwischen angeordnete Trennschicht (103) aus elektrisch isolierendem Material umfasst.

4. Knotenelement nach Anspruch 3, **dadurch gekennzeichnet, dass** eine erste der zwei elektrischen Polaritäten am Aussenteil (101) abgegriffen ist.

5. Knotenelement nach Anspruch 3 oder 4, **dadurch gekennzeichnet, dass** der Innenteil (102) Gewinde (110, 120, 130) zur Befestigung der zwei oder mehreren Rohre (200) aufweist.

6. Knotenelement nach Anspruch 5, **dadurch gekennzeichnet, dass** eine Aussenfläche des Aussenteils (101) des Knotenelements (100) einen ersten der beiden elektrisch isolierten Bereiche (101) bildet und dass die Gewinde (110, 120, 130) einen zweiten der beiden elektrisch isolierten Bereiche (102) bilden.

7. Knotenelement nach einem der Ansprüche 3 bis 6, **dadurch gekennzeichnet, dass** der Aussenteil (101) und der Innenteil (102) aus einem metallischen Material gefertigt sind.

8. Möbelsystem mit einer dreidimensionalen tragenden Rohrstruktur, umfassend eine Mehrzahl von Rohren (200) und eine Mehrzahl von dreidimensionalen Knotenelementen (100) nach einem der Ansprüche 1 bis 7, wobei zumindest eines der Rohre (200) zwei voneinander isolierte Stromleiter (201, 212) zur Stromführung einer ersten Polarität und einer zweiten Polarität entlang des Rohrs (200) aufweist, derart dass nach der mechanischen Befestigung des Rohrs (200) am Knotenelement (100) die zwei Stromleiter (201, 212) elektrisch mit den zwei voneinander elektrisch isolierten Bereichen (101, 102) des Knotenelements (100) verbunden sind.

9. Möbelsystem nach Anspruch 8, **dadurch gekennzeichnet, dass** die zwei voneinander isolierten Stromleiter (201, 212) zur Stromführung in zumindest einem der Rohre (200) koaxial zueinander angeordnet sind.

10. Möbelsystem nach Anspruch 9, **dadurch gekennzeichnet, dass** das zumindest eine Rohr (200) ein strukturelles Rohrelement (201) aus einem leitenden Material umfasst, welches zur Führung der ersten Polarität dient, und einen isoliert im strukturellen Rohrelement (201) aufgenommenen Innenleiter (212) zur Führung der zweiten Polarität.

11. Möbelsystem nach einem der Ansprüche 8 bis 10, **gekennzeichnet durch** Konnektoren (221, 222, 230), welche einerseits an den Knotenelementen (100) und andererseits an den Rohren (200) anbringbar sind und gleichzeitig eine mechanisch belastbare Befestigung und eine elektrische Kontaktierung zwischen Knotenelement (100) und daran angebrachtem Rohr schaffen.

12. Möbelsystem nach den Ansprüchen 10 und 11, **dadurch gekennzeichnet, dass** die Konnektoren folgendes umfassen:
a) ein mechanisches Befestigungselement (221, 222), welches zum Festhalten eines am Konnektor zu befestigenden Rohrs mittels einer Schraube (230) spannbar ist, wobei die Schraube (230) derart am mechanischen Befestigungselement (221, 222) angeordnet ist, dass sie mit einem Gewinde eines der Knotenelemente (100) zusammenwirken kann, und
b) ein elektrisches Kontaktelement (242) zur Kontaktierung der Schraube (230) und des Innenleiters (212) des durch das mechanische Befestigungselement (221, 222, 230) gehaltenen Rohrs (200).

13. Verfahren zur Herstellung eines Knotenelements (100) nach einem der Ansprüche 3 bis 7, **gekennzeichnet durch** folgende Schritte:
a) Bearbeiten eines Werkstücks aus einem leitenden Material zur Erzeugung zweier koaxial vorliegender, vollständig voneinander getrennter Teile (101, 102), insbesondere durch einen Fräs- und/oder Drehvorgang;
b) Einbringen einer Trennschicht (103) aus elektrisch isolierendem Material zwischen die beiden Teile (101, 102).

## Claims

1. Node element (100) for a furniture system having a three-dimensional load-bearing tubular structure, wherein the node element (100) comprises a plurality of connection points (110, 120, 130) for the mechanical fastening of two or more tubes (200) and wherein the node element (100) has two regions (101, 102) which are electrically insulated from each other, **characterized in that** the two mutually electrically insulated regions (101, 102) are arranged such that two electrical polarities can be coaxially tapped at the connection points (110, 120, 130) for the tubes (200), in such a way that the inner insulated region (102) is wholly enclosed by the outer insulated region (101).

2. Node element according to Claim 1, **characterized by** a plurality of mutually electrically insulated, coaxially arranged regions (101, 102), which are arranged such that electric current can be carried bipolarly from each tube (200) fastenable to the node element (100) into any other tube (200) fastened to the node element (100).

3. Node element according to Claim 2, **characterized in that** it comprises an outer part (101) made of a conductive material, a therein accommodated inner part (102) made of a conductive material, and an intervening separation layer (103) of electrically insulating material.

4. Node element according to Claim 3, **characterized in that** a first of the two electrical polarities is tapped at the outer part (101).

5. Node element according to Claim 3 or 4, **characterized in that** the inner part (102) has threads (110, 120, 130) for fastening of the two or more tubes (200).

6. Node element according to Claim 5, **characterized in that** an outer surface of the outer part (101) of the node element (100) forms a first of the two electrically insulated regions (101), and **in that** the threads (110, 120, 130) form a second of the two electrically insulated regions (102).

7. Node element according to one of Claims 3 to 6, **characterized in that** the outer part (101) and the inner part (102) are produced from a metallic material.

8. Furniture system having a three-dimensional load-bearing tubular structure, comprising a plurality of tubes (200) and a plurality of three-dimensional node elements (100) according to one of Claims 1 to 7, wherein at least one of the tubes (200) has two mutually insulated current conductors (201, 212) for carrying current of a first polarity and a second polarity along the tube (200), such that, following the mechanical fastening of the tube (200) to the node element (100), the two current conductors (201, 212) are electrically connected to the two mutually electrically insulated regions (101, 102) of the node element (100).

9. Furniture system according to Claim 8, **characterized in that** the two mutually insulated current conductors (201, 212) for carrying current in at least one of the tubes (200) are arranged coaxially to each other.

10. Furniture system according to Claim 9, **characterized in that** the at least one tube (200) comprises a structural tube element (201) made of a conductive material, which serves to carry the first polarity, and an inner conductor (212), accommodated in insulated arrangement in the structural tube element (201), for carrying the second polarity.

11. Furniture system according to one of Claims 8 to 10, **characterized by** connectors (221, 222, 230), which are attachable, on the one hand, to the node elements (100) and, on the other hand, to the tubes (200), and at the same time create a mechanically loadable fastening and an electrical contacting between the node element (100) and the tube (200) attached thereto.

12. Furniture system according to Claims 10 and 11, **characterized in that** the connectors comprise the following:
a) a mechanical fastening element (221, 222), which, for the securement of a tube to be fastened to the connector, can be tensioned by means of a screw (230), wherein the screw (30) is arranged in such a way on the mechanical fastening element (221, 222) that it can cooperate with a thread (100) of one of the node elements, and
b) an electrical contact element (242) for contacting the screw (320) and the inner conductor (212) of the tube (200) held by the mechanical fastening element (221, 222, 230).

13. Method for producing a node element (100) according to one of Claims 3 to 7, **characterized by** the following steps:
a) machining of a workpiece made of a conductive material in order to produce, in particular by a milling and/or turning operation, two coaxially existing parts (101, 102) which are fully separated from each other.
b) introduction of a separation layer (103) of electrically insulating material between the two parts (101, 102).

## Revendications

1. Élément nodal (100) pour un système de meuble comprenant une structure tubulaire porteuse tridimensionnelle, l'élément nodal (100) comprenant plusieurs points de raccordement (110, 120, 130) destinés à la fixation mécanique de deux tubes (200) ou plus, l'élément nodal (100) possédant deux zones (101, 102) isolées électriquement l'une de l'autre, **caractérisé en ce que** les deux zones (101, 102) isolées électriquement l'une de l'autre sont disposées de telle sorte que deux polarités électriques sont prélevées de manière coaxiale au niveau des points de raccordement (110, 120, 130) pour les tubes (200), de telle sorte que la zone isolée intérieure (102) est entièrement entourée par la zone isolée extérieure (101).

2. Élément nodal selon la revendication 1, **caractérisé par** plusieurs zones (101, 102) disposées de manière coaxiale et isolées électriquement les unes des autres, lesquelles sont disposées de telle sorte qu'un courant électrique bipolaire peut être conduit de chaque tube (200) pouvant être fixé à l'élément nodal (100) dans chaque autre tube (200) pouvant être fixé à l'élément nodal (100).

3. Élément nodal selon la revendication 2, **caractérisé en ce qu'**il comporte une partie extérieure (101) constituée d'un matériau conducteur, d'une partie intérieure (102) en un matériau conducteur accueillie dans celle-ci et d'une couche de séparation (103) en un matériau électriquement isolant disposée entre celles-ci.

4. Élément nodal selon la revendication 3, **caractérisé en ce qu'**une première des deux polarités électriques est prélevée au niveau de la partie extérieure (101).

5. Élément nodal selon la revendication 3 ou 4, **caractérisé en ce que** la partie intérieure (102) possède des filetages (110, 120, 130) destinés à la fixation des deux tubes (200) ou plus.

6. Élément nodal selon la revendication 5, **caractérisé en ce qu'**une surface extérieure de la partie extérieure (101) de l'élément nodal (100) forme une première des deux zones (101) isolées électriquement et **en ce que** les filetages (110, 120, 130) forment une deuxième des deux zones (102) isolées électriquement.

7. Élément nodal selon l'une des revendications 3 à 6, **caractérisé en ce que** la partie extérieure (101) et la partie intérieure (102) sont fabriquées en un matériau métallique.

8. Système de meuble comprenant une structure tubulaire porteuse tridimensionnelle, comprenant une pluralité de tubes (200) et une pluralité d'éléments nodaux (100) tridimensionnels selon l'une des revendications 1 à 7, au moins l'un des tubes (200) possédant deux conducteurs électriques (201, 212) isolés l'un de l'autre servant à la conduite de courant d'une première polarité et d'une deuxième polarité le long du tube (200), de telle sorte qu'après la fixation mécanique du tube (200) à l'élément nodal (100), les deux conducteurs électriques (201, 212) sont reliés électriquement aux deux zones (101, 102) isolées électriquement l'une de l'autre de l'élément nodal (100) .

9. Système de meuble selon la revendication 8, **caractérisé en ce que** les deux conducteurs électriques (201, 212) isolés l'un de l'autre destinés à la conduite du courant sont disposés dans au moins l'un des tubes (200) de manière coaxiale l'un par rapport à l'autre.

10. Système de meuble selon la revendication 9, **caractérisé en ce que** l'au moins un tube (200) comporte un élément tubulaire structural (201) en un matériau conducteur, lequel sert à la conduite de la première polarité, et un conducteur intérieur (212) logé dans l'élément tubulaire structural (201) pour la conduite de la deuxième polarité.

11. Système de meuble selon l'une des revendications 8 à 10, **caractérisé par** des connecteurs (221, 222, 230) qui peuvent être montés d'une part sur les éléments nodaux (100) et d'autre part sur les tubes (200) et qui réalisent simultanément une fixation pouvant supporter une charge mécanique et une mise en contact électrique entre l'élément nodal (100) et le tube monté sur celui-ci.

12. Système de meuble selon les revendications 10 et 11, **caractérisé en ce que** les connecteurs comprennent ce qui suit :
a) un élément de fixation mécanique (221, 222) qui peut être serré au moyen d'une vis (230) en vue de maintenir un tube à fixer au connecteur, la vis (230) étant disposée sur l'élément de fixation mécanique (221, 222) de telle sorte qu'elle peut coopérer avec un filetage de l'un des éléments nodaux (100), et
b) un élément de contact électrique (242) destiné à mettre en contact la vis (230) et le conducteur intérieur (212) du tube (200) maintenu par l'élément de fixation mécanique (221, 222, 230).

13. Procédé de fabrication d'un élément nodal (100) selon l'une des revendications 3 à 7, **caractérisé par** les étapes suivantes :
a) usinage d'une pièce constituée d'un matériau conducteur en vue de produire deux pièces (101, 102) se présentant de manière coaxiale et totalement séparées l'une de l'autre, notamment par une opération de fraisage et/ou de tournage ;
b) incorporation d'une couche de séparation (103) constituée d'un matériau électriquement isolant entre les deux pièces (101, 102).
